# EUROPEAN PATENT APPLICATION

(11) **EP 4 628 772 A1**
(43) Date of publication of application: **08.10.2025**
(21) Application number: 23895527.2
(22) Date of filing: 21.08.2023
(51) Int. Cl.: F16L 21/06, F16L 21/02, F16L 17/06

(54) **COUPLING ASSEMBLY FOR CONNECTING PIPES, AND MANUFACTURING METHOD THEREFOR**

(30) Priority: 30.11.2022 KR 20220164684
(71) Applicant: Newasia Co., Ltd., Yeoju-si Gyeonggi-do 12641 (KR)
(72) Inventor: LEE, Sang Heon, Seoul 06051 (KR); LEE, Won Ki, Paju-si, Gyeonggi-do 10893 (KR)
(74) Representative: AWA Sweden AB
(86) International application number: PCT/KR2023/012346
(87) International publication number: WO 2024/117463

(57) **Abstract**

The present invention relates to pipe j oints. More specifically, it relates to a coupling assembly for connecting pipes and a manufacturing method therefor. The coupling assembly for connecting pipes according to an aspect of the present invention includes two or more couplers which are disposed to oppose each other to connect pipes that are arranged continuously along the axial direction, and a coupling assembly for connecting the pipes while a fastening member is provisionally assembled to a plurality of the couplers.

## Description

### CROSS-REFERENCE TO RELATED APPLICATION

This application claims priority to and the benefit of Korean Patent Application No. 10-2022-0164684, filed on November 30, 2022, the disclosure of which is incorporated herein by reference in its entirety.

### [Technical Field]

The present invention relates to pipe joints. More specifically, it relates to a coupling assembly for connecting piples and a manufacturing method therefor.

### [Background Art]

Generally, pipes are connected by using couplings to connect pipes that are arranged continuously along the axial direction.

This coupling includes a plurality of segments that are arranged along the peripheral direction of the pipe and can be connected to each other, and while these segments are placed at the ends of the pipe, the plurality of segments are fastened to each other by using a separate fastening member to connect continuous pipes.

In this case, fastening grooves are formed along the peripheral direction at both ends of the pipe, and a part of the coupling is fastened while being inserted into these fastening grooves. This is to support the pipe through the coupling such that it does not open even when a force is applied in a direction of widening the gap between continuous pipes due to a pressure of the fluid inside the pipe.

**In** the case of a conventional coupling, the segments are formed with an arcuate surface that is inserted into such a fastening groove, and the fastening groove is formed in a shape where a part of the outer peripheral surface of the pipe is depressed. **In** this case, while the arcuate surface of the segment is arranged to be seated in this fastening groove, the segment is fastened. **In** order to ensure that the segment is stably fixed, the radius of curvature of the arcuate surface is formed to be equal to the radius of the outer peripheral surface of the fastening groove.

However, due to the structural characteristic that the outer circumferential radius of the pipe is formed to be greater than the outer circumferential radius of the fastening groove, the operator first places a first sealing member to prevent fluid leakage by directly inserting the same on the outer peripheral surface of the pipe, and while each segment is placed on top of the fastening groove, after seating the arcuate surface of the segment in the fastening groove by moving the same downward in the radial direction of the pipe, such segments are fastened to each other by using a fastening member. When the segments are placed and fastened in this way, the segments must be fastened with fastening members while maintaining the arrangement of a plurality of segments, and thus, it is difficult for the operator to work alone, and as a result, there has been a problem in that the work efficiency is reduced.

**In** order to improve this problem, Patent Document 1 describes a configuration that can improve workability by forming the radius of curvature of the arcuate surface of the segment to be greater than the radius of the outer peripheral surface of the pipe. **In** other words, since the radius of curvature of the arcuate surface of the segment is formed to be greater than the radius of the outer peripheral surface of the pipe, these segments can be moved in the axial direction of the pipe while being provisionally assembled with fastening members, and through this, the provisionally assembled segment moves past the outer peripheral surface of the pipe to a position where the fastening groove is formed, and when the fastening member is tightened, it describes a segment that can be deformed such that the radius of curvature of this arcuate surface matches the radius of the outer peripheral surface of the fastening groove.

In this case, a second sealing member is provided inside the coupling to prevent the leakage of fluid flowing through the pipe, and while this second sealing member is placed inside the provisionally assembled coupling, it is moved along with the coupling in the axial direction of the pipe. That is, since the second sealing member is placed inside the coupling in a provisionally assembled state, the operator cannot directly move the second sealing member by hand, and since it is installed by moving the second sealing member along with the coupling, the peripheral length of the second sealing member is formed to be longer than the peripheral length of the first sealing member such that the sealing member moves smoothly.

However, the size of the internal space of the coupling (a space where the sealing member is placed) is designed by considering the peripheral length of the first sealing member, and when the second sealing member is placed in this coupling, there is a problem in that due to the increased peripheral length, the leakage of fluid occurs as the second sealing member is deformed in the peripheral direction when the coupling is fastened.

Therefore, there is a need to develop techniques that can improve the same.

(Patent Document 1) Korean Patent Application Laid-Open No. 10-2007-0012723 (published on January 26, 2007)

### [Disclosure]

### [Technical Problem]

The present invention has been devised to solve the above problems, and an object of the present invention is to provide a coupling assembly for connecting pipes in which after a plurality of couplers are placed on a pipe in a provisionally assembled state, continuous pipes are connected in such a way that the plurality of couplers are fastened to each other through a fastening member, and in this process, it is possible to prevent a sealing member disposed inside the plurality of couplers from being deformed in the peripheral direction, and a manufacturing method therefor.

The problems of the present invention are not limited to the problems mentioned above, and other problems that are not mentioned will be clearly understood by those skilled in the art from the description below.

### [Technical Solution]

The coupling assembly for connecting pipes according to an aspect of the present invention is a coupling assembly for connecting pipes in which two or more couplers are disposed to oppose each other to connect pipes that are arranged continuously along the axial direction, and which connects the pipes while a fastening member is provisionally assembled to a plurality of the couplers, wherein the coupler includes a body portion which is provided with an internal space in which a sealing member is disposed, a locking portion which extends inward in the radial direction at both ends of the body portion in the width direction and is inserted into a fastening groove formed in the pipe, and a fastening portion which is disposed at both ends in the peripheral direction of the body portion and through which the fastening member is fastened, wherein the sealing member includes a base which is pressed by an inner surface of the body portion, a side wall which extends inward in the radial direction from the base, and a leg which extends from the side wall and is deformed inward in the radial direction so as to support an outer surface of the pipe when assembling the coupler, and wherein the inner surface of the body portion is provided with a receiving groove which extends radially outward such that at least a part of the base is inserted and disposed to prevent the sealing member from being deformed along the peripheral direction when assembling the coupler.

**In** this case, the receiving groove may be formed to extend along the peripheral direction on the inner surface of the body portion.

In this case, the cross-sectional area in the peripheral direction of the receiving groove may be formed to have a size that is equal to the difference between the cross-sectional area in the peripheral direction of the entire sealing member and the cross-sectional area in the peripheral direction of the internal space based on a state where the leg is deformed and supports the outer surface of the pipe as the coupler is assembled.

In this case, on both sides of the locking portion, interference prevention grooves may be provided to prevent interference between the locking portion and the pipe such that the outer peripheral surface of the pipe can penetrate between the provisionally assembled couplers, wherein the interference prevention groove is provided with a first extension surface which is formed to extend outward in the radial direction, and a second extension surface which is formed to extend downward from the first extension surface and has a curvature that is disposed on a concentric circle with a lower surface of the locking portion, and wherein the receiving groove is provided with a first receiving surface and a second receiving surface that are respectively disposed to be spaced apart outward in the radial direction from the first extension surface and the second extension surface by a first length.

In this case, one end and the other end of the first receiving surface may be disposed on a first extension line which respectively connects the center of the body portion and one end and the other end of the first extension surface, and wherein one end and the other end of the second receiving surface are disposed on a second extension line which respectively connects the center of the body portion and one end and the other end of the second extension surface.

In this case, the internal space disposed at the uppermost part of the body portion may be formed to have a depth that is equal to a second length along the radial direction, and wherein the second length is formed to be greater than or equal to the first length.

In this case, the cross-sectional area in the peripheral direction of the receiving groove may be formed to have a size that is equal to the difference between the cross-sectional area in the peripheral direction of the entire sealing member and the cross-sectional area in the peripheral direction of the internal space based on a state where the leg is deformed and supports an outer surface of the pipe as the coupler is assembled.

Meanwhile, the method for manufacturing a coupling assembly for connecting pipes according to another aspect of the present invention includes the steps of manufacturing a coupler including a body portion which is provided with an internal space in which a sealing member is disposed, a locking portion which extends inward in the radial direction at both ends of the body portion in the width direction and is inserted into a fastening groove formed in the pipe, and a fastening portion which is disposed at both ends in the peripheral direction of the body portion and through which the fastening member is fastened; and forming a receiving groove on an inner surface of the body portion into which at least a part of a base provided on the sealing member is inserted, wherein the step of forming a receiving groove on an inner surface of the body portion includes the step of forming the cross-sectional area in the peripheral direction of the receiving groove to have a size that is equal to the difference between the cross-sectional area in the peripheral direction of the entire sealing member and the cross-sectional area in the peripheral direction of the internal space based on a state where a leg of the sealing member is deformed and supports an outer surface of the pipe as the coupler is assembled.

### [Advantageous Effects]

According to the above configurations, the coupling assembly for connecting pipes according to an exemplary embodiment of the present invention and the manufacturing method therefor connect continuous pipes in such a way that after a plurality of couples are placed on a pipe in a provisionally assembled state, the plurality of couplers are fastened to each other through a fastening member, and since a receiving groove is provided on the radial outer side such that a part of the body portion of a sealing member is inserted and disposed on the inner surface of the coupler body portion, it is possible to prevent peripheral deformation from occurring in the sealing member disposed inside the plurality of couplers during the process of fastening the plurality of couplers, and thus, it can effectively prevent the leakage of fluid flowing through the pipe.

The effects of the present invention are not limited to the effects described above, and should be understood to include all effects that can be inferred from the configuration of the invention described in the detailed description or claims of the present invention.

### [Description of Drawings]

FIG. 1 is a perspective view illustrating a state where the coupling assembly for connecting pipes according to an exemplary embodiment of the present invention is fastened to a pipe.
FIG. 2 is a perspective view illustrating the disassembled state of the coupling assembly for connecting pipes according to an exemplary embodiment of the present invention.
FIG. 3 is a radial cross-sectional view illustrating the provisionally assembled state of the coupling assembly for connecting pipes according to an exemplary embodiment of the present invention.
FIG. 4 is a radial cross-sectional view illustrating the provisionally assembled state of the coupling assembly for connecting pipes according to another exemplary embodiment of the present invention.
FIG. 5 is a cross-sectional view in the width direction illustrating the provisionally assembled state of the coupling assembly for connecting pipes according to an exemplary embodiment of the present invention.
FIG. 6 is a radial cross-sectional view illustrating the fastened state of the coupling assembly for connecting pipes according to an exemplary embodiment of the present invention.
FIG. 7 is a radial cross-sectional view illustrating the fastened state of a coupling assembly for connecting pipes according to another exemplary embodiment of the present invention.
FIG. 8 is a cross-sectional view in the width direction illustrating the fastened state of the coupling assembly for connecting pipes according to an exemplary embodiment of the present invention.
FIG. 9 is a perspective view illustrating the coupler according to an exemplary embodiment of the present invention.
FIG. 10 is a perspective view illustrating the coupler according to another exemplary embodiment of the present invention.
FIG. 11 is a radial cross-sectional view comparing the cross-sectional area in the peripheral directions of the internal space, receiving groove and sealing member of the coupler according to an exemplary embodiment of the present invention.
FIG. 12 is a radial cross-sectional view comparing the cross-sectional area in the peripheral directions of the internal space, receiving groove and sealing member of the coupler according to another exemplary embodiment of the present invention.
FIG. 13 is a flowchart illustrating the method for manufacturing a coupling assembly for connecting pipes according to an exemplary embodiment of the present invention.

### [Modes of the Invention]

Hereinafter, with reference to the attached drawings, the exemplary embodiments of the present invention will be described in detail so that those skilled in the art can easily practice the present invention. The present invention may be implemented in many different forms and is not limited to the exemplary embodiments described herein. In order to clearly describe the present invention, parts that are not relevant to the description have been omitted in the drawings, and the same or similar components are assigned the same reference numerals throughout the specification.

The words and terms used in the present specification and claims are not to be construed as limited in their usual or dictionary meanings, but according to the principle that the inventor can define terms and concepts in order to explain his or her invention in the best way, they must be interpreted with meanings and concepts that are consistent with the technical ideas of the present invention.

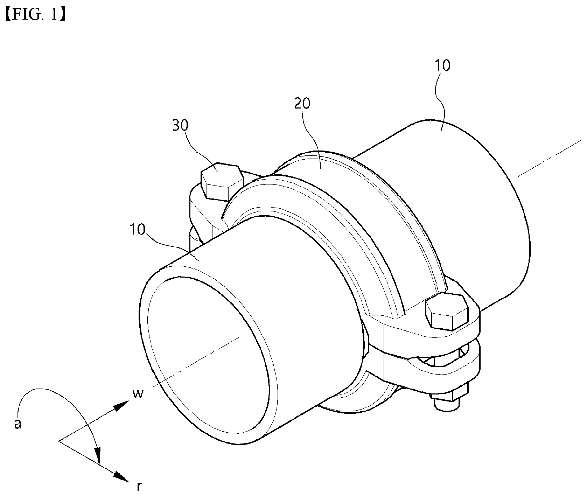

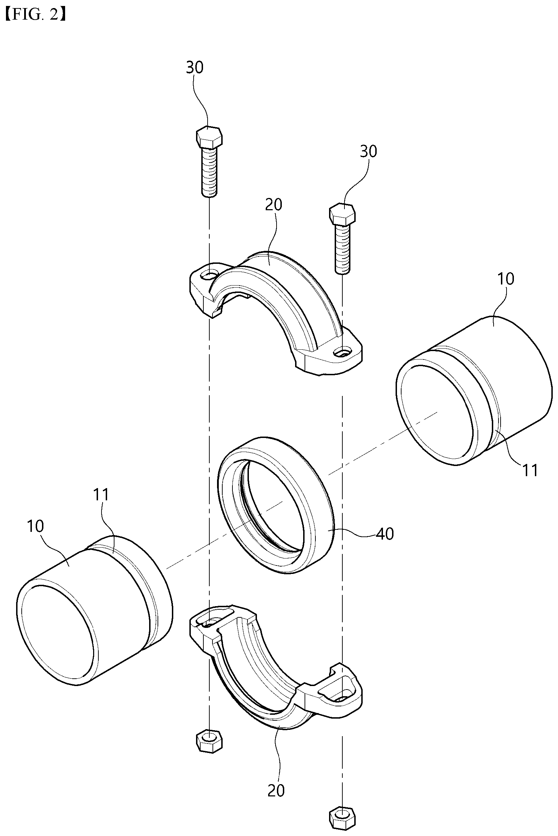

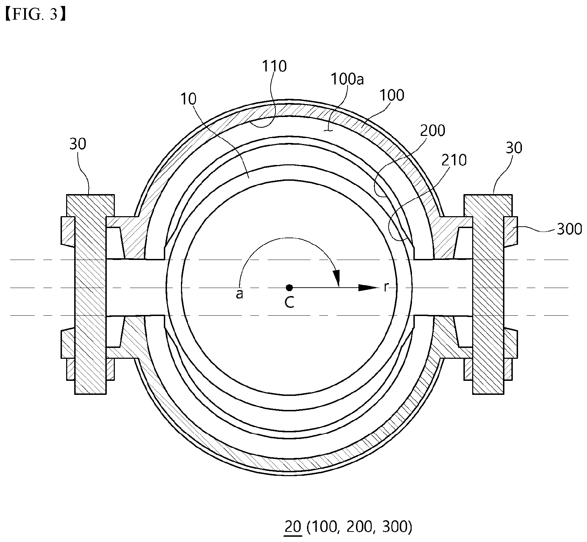

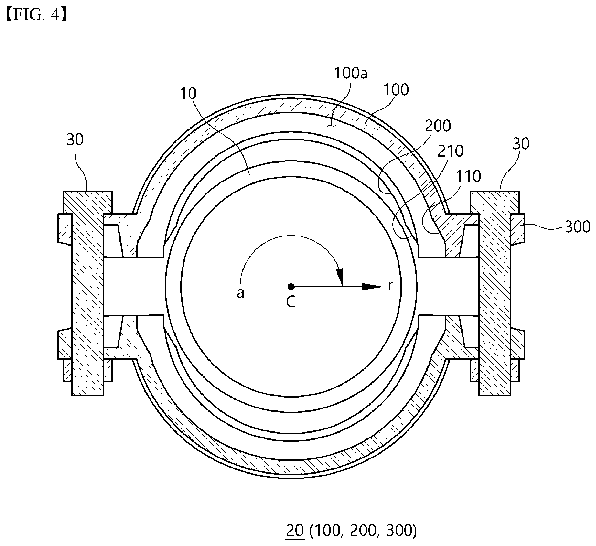

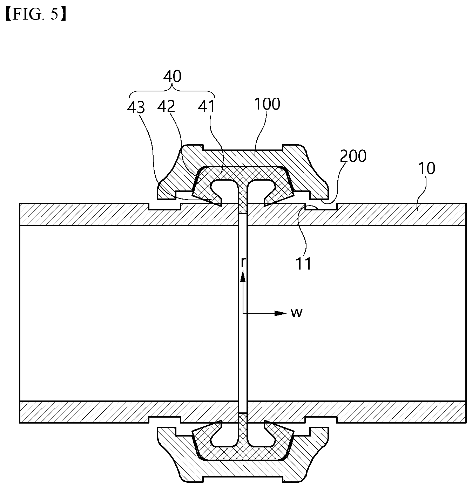

FIG. 1 is a perspective view illustrating a state where the coupling assembly for connecting pipes according to an exemplary embodiment of the present invention is fastened to a pipe, FIG. 2 is a perspective view illustrating the disassembled state of the coupling assembly for connecting pipes according to an exemplary embodiment of the present invention, FIG. 3 is a radial cross-sectional view illustrating the provisionally assembled state of the coupling assembly for connecting pipes according to an exemplary embodiment of the present invention, FIG. 4 is a radial cross-sectional view illustrating the provisionally assembled state of the coupling assembly for connecting pipes according to another exemplary embodiment of the present invention, and FIG. 5 is a cross-sectional view in the width direction illustrating the provisionally assembled state of the coupling assembly for connecting pipes according to an exemplary embodiment of the present invention. Herein, the r direction means the radial direction, the a direction means the peripheral direction, and the w direction means the width direction (same as the axial direction of the pipe). In order to clearly describe the present invention, parts that are not relevant to the description are omitted from the drawings.

As illustrated in FIGS. 1 and 2, the coupling assembly according to the present invention is configured such that two or more couplers 20 are disposed to oppose each other to connect pipes 10 that are arranged continuously along the axial direction, and it connects the pipes 10 while a fastening member 30 is provisionally assembled to a plurality of the couplers 20. That is, as illustrated in FIGS. 3 and 4, the state where the fastening member 30 is provisionally assembled to the plurality of couplers 20 is means a state configured such that two or more couplers 20 are disposed to be spaced apart from each other at a certain distance, and two or more couplers 20 are not completely separated by the fastening member 30.

The operator moves two or more couplers 20 in the axial direction of the pipe 10 in a state where the two or more couplers 20 are provisionally assembled with the fastening member 30, and through this, as illustrated in FIG. 5, the two or more couplers 20 that are provisionally assembled and the sealing member 40 that is disposed in the internal space 100a move past the outer peripheral surface of the pipe 10 to a position where the fastening groove 11 is formed.

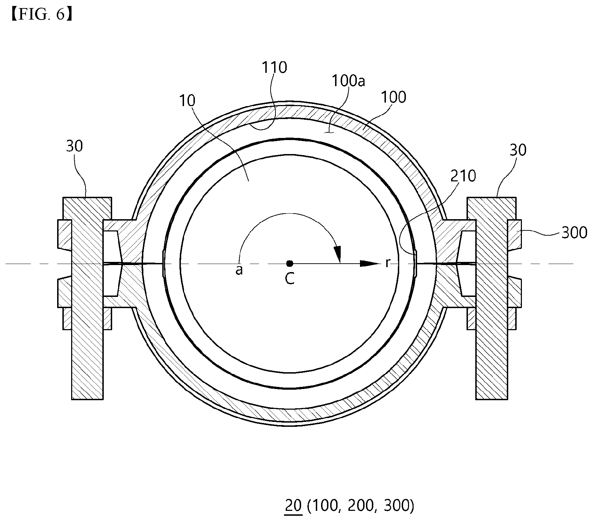

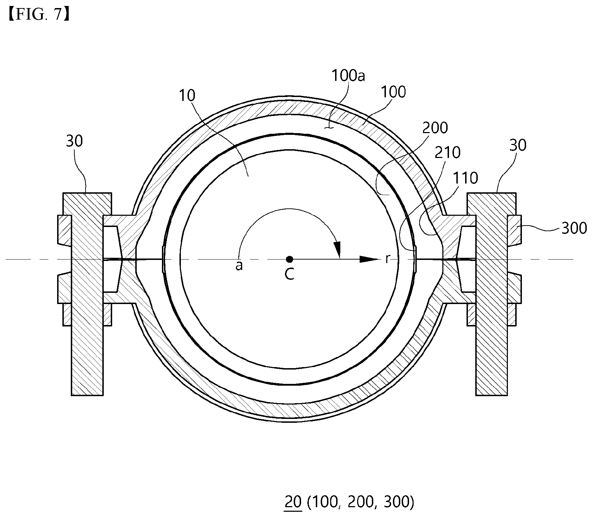

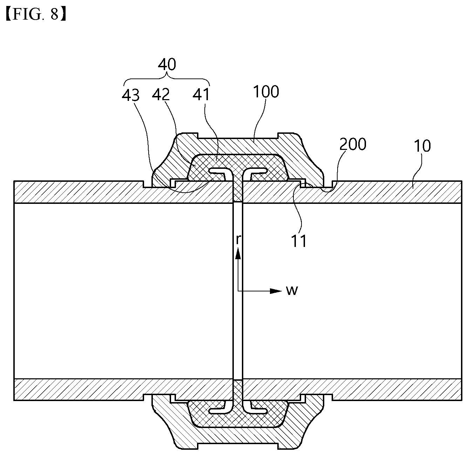

FIG. 6 is a radial cross-sectional view illustrating the fastened state of the coupling assembly for connecting pipes according to an exemplary embodiment of the present invention, FIG. 7 is a radial cross-sectional view illustrating the fastened state of a coupling assembly for connecting pipes according to another exemplary embodiment of the present invention, and FIG. 8 is a cross-sectional view in the width direction illustrating the fastened state of the coupling assembly for connecting pipes according to an exemplary embodiment of the present invention.

As illustrated in FIGS. 6 and 7, the operator applies a fastening force to the fastening member 30 by using a separate fastening tool such that two or more couplers 20 come into contact with each other. Through this, the two or more couplers 20 move in the radial direction (r) and press the sealing member 40 which is disposed in the internal space 100a, and as illustrated in FIG. 8, as the sealing member 40 is pressed in the radial direction (r), it comes into close contact with the outer surface of the pipe 10.

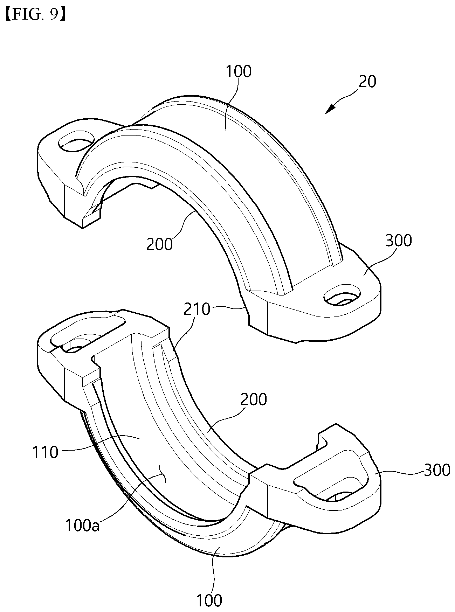

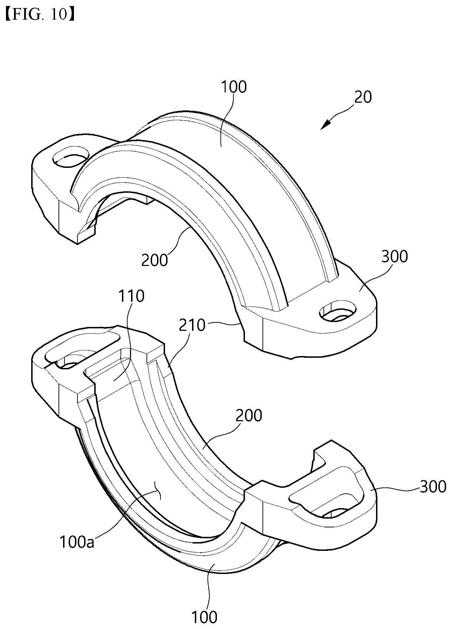

FIG. 9 is a perspective view illustrating the coupler according to an exemplary embodiment of the present invention, and FIG. 10 is a perspective view illustrating the coupler according to another exemplary embodiment of the present invention.

As illustrated in FIGS. 9 and 10, such a coupler 20 includes a body portion 100 which is provided with an internal space 100a in which a sealing member 40 is disposed, a locking portion 200 which extends inward in the radial direction at both ends of the body portion 100 in the width direction (w) and is inserted into a fastening groove 11 formed in the pipe 10, and a fastening portion 300 which is disposed at both ends in the peripheral direction (a) of the body portion 100 and through which the fastening member 30 is fastened.

The inner diameter of such a locking portion 200 is formed in a size corresponding to the outer diameter of the fastening groove 11. That is, the inner diameter of the locking portion 200 is formed to a size corresponding to the outer diameter of the fastening groove 11 such that the locking portion 200 can come into close contact with the outer surface of the fastening groove 11. In this case, the inner diameter of the locking portion 200 may be formed to be somewhat larger than the outer diameter of the fastening groove 11. This is because the locking portion 200 is in closer contact with the fastening groove 11 outward in the radial direction. It is preferable that the difference in size between the inner diameter of the locking portion 200 and the outer diameter of the fastening groove 11 is formed just enough to enable the locking portion 200 to come into close contact with the outer surface of the fastening groove 11. When configured in this way, it is possible to secure the structural stability by the locking portion 200 coming into close contact with the outer surface of the fastening groove 11.

In addition, such a coupler 20 is formed with a fastening portion 300 through which the fastening member 30 penetrates, and after simultaneously penetrating the fastening portions 300 formed on the opposing couplers 20 with the fastening member 30, it becomes fastened. In this way, when the coupler 20 that is provisionally assembled by the fastening member 30 is placed in the correct position, before fastening by using the fastening member 30, the operator moves the couplers 20 that are arranged to oppose each other in parallel to the radial inner side of the pipe 10, and checks whether the coupler 20 is normally fastened by bringing the bottom surfaces formed on the fastening portions 300 into contact with each other. In this case, the coupler 20 is formed such that the bottom surfaces formed on the fastening portions 300 can contact each other without any additional deformation.

When the continuously arranged pipe 10 and the provisionally assembled coupler 20 are installed in the correct position, a fastening force is applied by using the fastening member 30 afterwards. When the fastening force is applied in this way, the couplers 20 that are arranged to oppose each other move in parallel to the inner side of the radial direction (r) of the pipe 10, and when the fastening portion 300 that is formed on the coupler 20 comes into contact, the coupler 20 no longer moves, and in this state, a certain level of fastening torque is applied to the fastening member 30. In this case, since the inner diameter of the locking portion 200 is formed to be somewhat larger than the outer diameter of the fastening groove 11 to the extent that the locking portion 200 can come into close contact with the outer surface of the fastening groove 11, no deformation occurs in the coupler 20 during the process of the fastening portion 300 formed on the coupler 20 coming into contact with the coupler 20.

Moreover, as described above, when the coupler 20 moves parallel to the inner side of the radial direction (r) of the pipe 10, the locking portion 200 formed on the coupler 20 is inserted into the fastening groove 11, and afterwards, the pipe 10 is supported so as not to spread in the axial direction by a fluid pressure inside the pipe 10.

In this case, the sealing member 40 includes a base 41 which is pressed by an inner surface of the body portion 100, a side wall 42 which extends inward in the radial direction (r) from the base 41, and a leg 43 which extends from the side wall 42 and is deformed inward in the radial direction (r) so as to support an outer surface of the pipe 10 when assembling the coupler 20. That is, the outer surface of the base 41 and the outer surface of the side wall 42 come in contact with the inner surface of the coupler 20, and when a fastening force is applied through the fastening member 30 to assemble the coupler 20, the base 41 and the side wall 42 are pressed by the coupler 20, and the leg 43 is deformed inward in the radial direction (r) and comes into close contact with the outer surface of the pipe 10.

However, as described above, the sealing member 40 provided in the coupling assembly for connecting pipes according to an exemplary embodiment of the present invention is formed to be longer in the peripheral direction (a) than the conventional first sealing member. That is, the cross-sectional area of the sealing member 40 in the width direction (w) is maintained, but since the length in the peripheral direction (a) increases, the overall volume of the sealing member 40 is formed to be larger than that of the conventional first sealing member.

For example, in the case of a coupler used to fasten a 50A pipe, the conventional first sealing member has a volume of about 30 cm³, but the sealing member 40 provided in the coupling assembly for connecting pipes according to an exemplary embodiment of the present invention has a volume of about 37 cm³ (about 7 cm³ volume increase). That is, when such a sealing member 40 is placed and fastened to a conventional coupler, deformation occurs in the sealing member 40 along the peripheral direction (a) due to an increased volume.

That is, when assembling the coupler 20, the sealing member 40 is pressed, and whereas the deformation in which and the leg 43 is deformed inward in the radial direction (r) to come into close contact with the outer surface of the pipe 10 is an essential deformation to prevent the leakage of fluid flowing inside the pipe 10, the deformation of the sealing member 40 that occurs along the peripheral direction (a) is an unintentional deformation, and as a result, it causes the leakage of fluid.

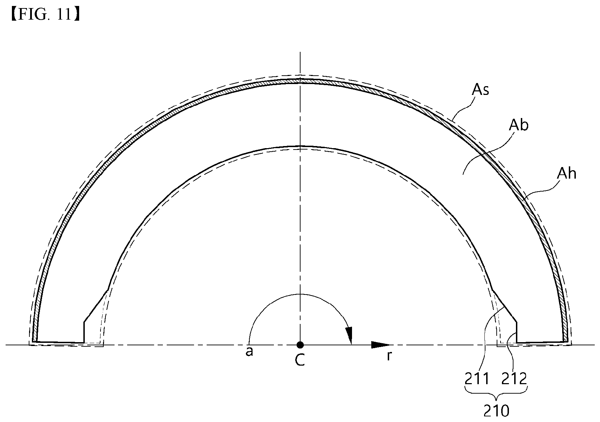

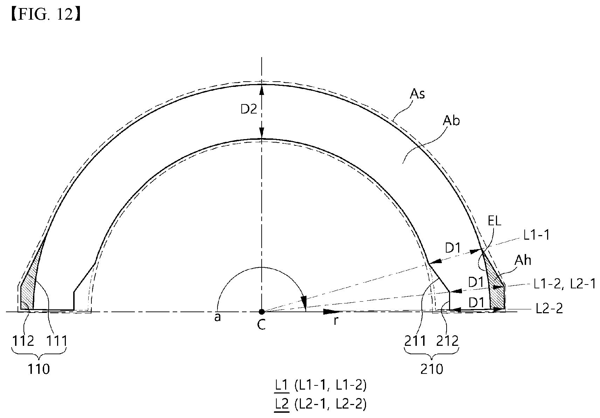

FIG. 11 is a radial cross-sectional view comparing the cross-sectional area in the peripheral directions of the internal space, receiving groove and sealing member of the coupler according to an exemplary embodiment of the present invention, and FIG. 12 is a radial cross-sectional view comparing the cross-sectional area in the peripheral directions of the internal space, receiving groove and sealing member of the coupler according to another exemplary embodiment of the present invention.

In order to prevent the above-described problem from occurring, as illustrated in FIGS. 11 and 12, the inner surface of the body portion 100 is provided with a receiving groove 110 which extends outward in the radial direction (r) such that at least a portion of the base 41 is inserted and disposed to prevent the sealing member 40 from being deformed along the peripheral direction (a) when assembling the coupler 20.

That is, basically, as the fastening force is gradually applied to the fastening member 30 for assembling the coupler 20, the sealing member 40 is gradually pressed inward in the radial direction (r), and the leg 43 comes into close contact with the outer surface of the pipe 10. When deformation occurs in the sealing member 40 along the peripheral direction (a) as a fastening force is continuously applied to the fastening member 30, the base 41 of the sealing member 40 is partially inserted and disposed into the receiving groove 110 such that it is possible to prevent the deformation in the peripheral direction (a) form occurring, and through this, it is possible to effectively prevent the leakage of fluid.

As illustrated in FIGS. 9 and 11, the receiving groove 110 may be formed on the inner surface of the body portion 100 to extend along the peripheral direction (a). That is, when configured in this way, the leakage of fluid may be effectively prevented because the sealing member 40 is uniformly pressed along the peripheral direction (a) by the coupler 20, and it is possible to easily manufacture the receiving groove 110 so as to correspond to the increased peripheral direction (a) length of the sealing member 40.

In this case, as illustrated in FIG. 11, the receiving groove 110 is formed to extend from one side end of the body portion 100 through the uppermost part of the body portion 100 to the other side end of the body portion 100, and the cross-sectional area (Ah) in the peripheral direction (a) of the receiving groove 110 may be formed to have a size that is equal to the difference between the cross-sectional area (As) in the peripheral direction of the entire sealing member 40 and the cross-sectional area (Ab) in the peripheral direction (a) of the internal space 100a based on a state where the leg 43 is deformed and supports the outer surface of the pipe as the coupler 20 is assembled.

That is, the cross-sectional area (As) in the peripheral direction (a) is measured based on a state where the leg 43 of the sealing member 40 is deformed inward in the radial direction (r) so as to be in close contact with the outer surface of the pipe 10, and the cross-sectional area (Ab) in the peripheral direction (a) of the internal space 100a inside the coupler 20 is measured to form the size of the cross-sectional area (Ah) in the peripheral direction (a) of the receiving groove 110 by the difference of the cross-sectional areas thereof.

As described above, since the sealing member 40 provided in the coupling assembly for connecting pipes according to an exemplary embodiment of the present invention is formed to have a length in the peripheral direction (a) that is longer than the conventional first sealing member, the cross-sectional area (As) in the peripheral direction (a) of the sealing member 40 is formed to be larger than the cross-sectional area (Ab) in the peripheral direction (a) of the internal space 100a inside the coupler 20. Therefore, when the size of the cross-sectional area (Ah) in the peripheral direction (a) of the receiving groove 110 is formed by the difference in the sizes of the cross-sectional areas thereof, it is possible to prevent the sealing member 40 from being deformed in the peripheral direction (a) when assembling the coupler 20, and thus, it is possible to effectively prevent the leakage of fluid.

As illustrated in FIGS. 10 and 12, on both sides of the locking portion 200, on both sides of the locking portion 200, interference prevention grooves 210 may be provided to prevent interference between the locking portion 200 and the pipe 10 such that the outer peripheral surface of the pipe 10 can penetrate between the provisionally assembled couplers 20, and such an interference prevention groove may be provided with a first extension surface 211 which is formed to extend outward in the radial direction (r), and a second extension surface 212 which is formed to extend downward from the first extension surface 211 and has a curvature that is disposed on a concentric circle with a lower surface of the locking portion 200.

That is, when the locking portion 200 is configured to be in close contact with the outer surface of the fastening groove 11, it is possible to secure the structural stability, but as a result, when a plurality of couplers 20 are inserted along the outer surface of the pipe 10 along the axial direction in a state where the plurality of couplers 20 are provisionally assembled by the fastening member 30, there may be a problem in that as the locking portion is locked on the outer surface of the pipe 10, the plurality of provisionally assembled couplers 20 are not inserted.

Therefore, in order to solve this problem, as illustrated in FIG. 11, interference prevention grooves 210 are formed on both sides of the locking portion 200. Such an interference prevention groove 210 forms a gap between the provisionally assembled couplers 20 such that the outer surface of the pipe 10 can penetrate.

That is, since the structural stability is secured by the locking portion 200 coming into close contact with the outer surface of the fastening groove 11, and additionally, interference prevention grooves 210 are formed on both sides of the locking portion 200, the coupler 20 may be installed while penetrating the pipe 10 in the axial direction in a provisionally assembled state, thereby enhancing workability.

In this case, as illustrated in FIG. 11, the locking portion 200 may be formed with an inner surface which opposes the outer surface of the fastening groove 11, and the above-mentioned interference prevention groove 210 may be formed a first extension surface 211 which is formed to extend outward in the radial direction on the inner surface of the locking portion 200. That is, since such a first extension surface 211 extends outward in the radial direction (r) from the inner surface of the locking portion 200, it is easy to secure a gap between the locking portion 200 and the outer surface of the pipe 10.

In addition, the interference prevention groove 210 may be formed with a second extension surface 212 which is formed to extend downward from the first extension surface 211 and has a curvature that is disposed on a concentric circle with the inner surface of the locking portion 200. That is, while the first extension surface 211 is formed to extend outward in the radial direction (r), the second extension surface 212 is formed to further extend from such a first extension surface 211, and a gap is secured between the locking portion 200 and the outer surface of the pipe 10 by a portion where the first extension surface 211 and the second extension surface 212 are formed.

In this case, as illustrated in FIG. 11, the second extension surface 212 is formed to have a curvature that is disposed on a concentric circle with the inner surface of the locking portion 200. In this way, when the second extension surface 212 is formed to have a curvature that is disposed on a concentric circle with the inner surface of the locking portion 200, the second extension surface 212 may be disposed on a concentric circle with the outer surface of the fastening groove 11 formed on the pipe 10 and the outer surface of the pipe 10. In addition, when the second extension surface 212 is located outward in the radial direction (r) compared to the outer surface of the pipe 10, the operator may easily visually check whether the locking portion 200 is stably adhered to the outer surface of the fastening groove 11 through the arrangement of the outer surface of the pipe 10 and the second extension surface 212. To this end, the first extension surface 211 is preferably formed to a length such that the second extension surface 212 can be located outward in the radial direction (r) compared to the outer surface of the pipe 10.

In this case, the receiving groove 110 may be provided with a first receiving surface 111 and a second receiving surface 112 which are respectively disposed to be spaced apart from the first extension surface 211 and the second extension surface 212 by a first length (D1) outward in the radial direction (r). That is, basically, as the fastening force is gradually applied to the fastening member 30 for assembling the coupler 20, the sealing member 40 is gradually pressed inward in the radial direction (r), and the leg 43 comes into close contact with the outer surface of the pipe 10. When the sealing member 40 is deformed along the peripheral direction (a) as the fastening force is continuously applied to the fastening member 30, the base 41 of the sealing member 40 is partially inserted and disposed along the first receiving surface 111 and the second receiving surface 112 such that it is possible to prevent deformation in the peripheral direction (a) from occurring, and through this, it is possible to effectively prevent the leakage of fluid.

As illustrated in FIG. 12, one end and the other end of the first receiving surface 111 may be disposed on a first extension line (L1) which respectively connects the center (c) of the body portion 100 and one end and the other end of the first extension surface 211, and one end and the other end of the second receiving surface 112 may be disposed on a second extension line (L2) which respectively connects the center (c) of the body portion 100 and one end and the other end of the second extension surface 212.

Such a first extension line (L1) may include a first-1 unit extension line (L1-1) which connects the center (c) of the body portion and one end of the first extension surface 211, and a first-2 unit extension line (L1-2) which connects the center (c) of the body portion and the other end of the first extension surface 211, and the second extension line (L2) may include a second-1 unit extension line (L2-1) which connects the center (c) of the body portion and one end of the second extension surface 212, and a second-2 unit extension line (L2-2) which connects the center (c) of the body portion and the other end of the second extension surface 212.

In this way, when it is configured such that one end and the other end of the first receiving surface 111 are disposed on the first extension line (L1) which respectively connects the center (c) of the body portion 100 and one end and the other end of the first extension surface 211 and it is configured such that one end and the other end of the second receiving surface 112 are disposed on the second extension line (L2) which respectively connects the center (c) of the body portion 100 and one end and the other end of the second extension surface 212, the arrangement positions of the first receiving surface 111 and the second receiving surface 112 may be formed consistently, thereby improving manufacturability and structural stability.

In this case, as illustrated in FIG. 12, the internal space 100a which is disposed at the uppermost part of the body portion 100 may be formed to have a depth that is equal to the second length (D2) along the radial direction (r), and the second length (D2) may be formed to be greater than or equal to the first length (D1). That is, the second length (D2) is formed to be greater than or equal to the first length (D1) such that the degree to which the base 41 of the sealing member 40 is inserted into the internal space 100a disposed at the uppermost part of the body 100 increases, and thus, it is possible to more effectively prevent deformation in the peripheral direction (a) from occurring while the sealing member 40 is being pressed.

In this case, as illustrated in FIG. 12, the receiving groove 110 is a part which is surrounded by the first receiving surface 111 and the second receiving surface 112 that extend outward in the radial direction (r) from the extension line (EL) on the inner surface of the body portion 100, and the cross-sectional area (Ah) in the peripheral direction (a) of the receiving groove 110 changes while the leg 43 is deformed as the coupler 20 is assembled, and based on a state where the outer surface of the pipe 10 is supported, it may be formed to have a size that is equal to the difference between the cross-sectional area (As) in the peripheral direction (a) of the entire sealing member 40 and the cross-sectional area (Ab) in the peripheral direction (a) of the internal space 100a. In this case, the cross-sectional area (Ab) in the peripheral direction (a) of the internal space 100a is a cross-sectional area in the peripheral direction through the uppermost part of the body portion 100 having a depth that is equal to a second length (D2) formed to be greater than or equal to a first length (D1) from one end part of the body portion 100 having a depth that is equal to the first length (D1) to the other end part of the body portion 100 having a depth that is equal to the first length (D1).

That is, the cross-sectional area (As) in the peripheral direction (a) is measured based on a state where the leg 43 of the sealing member 40 is deformed inward in the radial direction (r) so as to be in close contact with the outer surface of the pipe 10, and the cross-sectional are (Ab) in the peripheral direction (a) of the internal space 100a inside the coupler 20 is measured to form the size of the cross-sectional area (Ah) in the peripheral direction (a) of the receiving groove by the difference between the cross-sectional areas thereof.

As described above, since the sealing member 40 provided in the coupling assembly for connecting pipes according to an exemplary embodiment of the present invention is formed to have a length in the peripheral direction (a) that is longer than the conventional first sealing member, the cross-sectional area (As) in the peripheral direction (a) of the sealing member 40 is formed to be greater than the cross-sectional area (Ab) in the peripheral direction (a) of the internal space 100a inside the coupler 20. Therefore, when the size of the cross-sectional area (Ah) in the peripheral direction (a) of the receiving groove 110 is formed by the difference in the sizes of the cross-sectional areas thereof, it is possible to prevent the sealing member 40 from being deformed in the peripheral direction (a) when assembling the coupler 20, and thus, it is possible to effectively prevent the leakage of fluid.

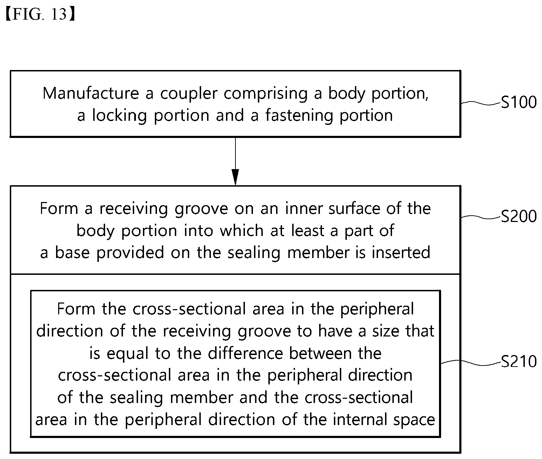

FIG. 13 is a flowchart illustrating the method for manufacturing a coupling assembly for connecting pipes according to an exemplary embodiment of the present invention.

As illustrated in FIG. 13, the method for manufacturing a coupling assembly for connecting pipes according to another aspect of the present invention includes the steps of manufacturing a coupler 20 including a body portion 100 which is provided with an internal space 100a in which a sealing member 40 is disposed, a locking portion 200 which extends inward in the radial direction (r) at both ends of the body portion in the width direction (w) and is inserted into a fastening groove 11 formed in the pipe 10, and a fastening portion 300 which is disposed at both ends in the peripheral direction (a) of the body portion 100 and through which the fastening member 30 is fastened (S100); and forming a receiving groove 110 on an inner surface of the body portion 100 into which at least a part of a base 41 provided on the sealing member 40 is inserted (S200), wherein the step of forming a receiving groove 110 on an inner surface of the body portion 100 (S200) includes the step of forming the cross-sectional area in the peripheral direction (a) of the receiving groove 110 to have a size that is equal to the difference between the cross-sectional area (As) in the peripheral direction (a) of the entire sealing member 40 and the cross-sectional area (Ab) in the peripheral direction (a) of the internal space 100a based on a state where a leg 43 of the sealing member 40 is deformed and supports an outer surface of the pipe 10 as the coupler 20 is assembled.

That is, the cross-sectional area (As) in the peripheral direction (a) is measured based on a state where the leg 43 of the sealing member 40 is deformed inward in the radial direction (r) so as to be in close contact with the outer surface of the pipe 10, and the cross-sectional area (Ab) in the peripheral direction (a) of the internal space 100a inside the coupler 20 is measured to form the size of the cross-sectional area (Ah) in the peripheral direction (a) of the receiving groove 110 by the difference between thee cross-sectional areas thereof. When it is configured in this way, it is possible to prevent the sealing member 40 from being deformed in the peripheral direction (a) when assembling the coupler 20, and thus, it is possible to effectively prevent the leakage of fluid.

As described above, in the coupling assembly for connecting pipes according to an exemplary embodiment of the present invention, basically, in the process of gradually applying a fastening force to the fastening member 30 to assemble the coupler 20, the sealing member 40 is gradually pressed inward in the radial direction (r), and the leg 43 is in close contact with the outer surface of the pipe 10, and as the fastening force is continuously applied to the fastening member, when deformation occurs in the sealing member 40 along the peripheral direction (a), the base 41 of the sealing member 40 is partially inserted and disposed into the receiving groove 110 such that it is possible to prevent deformation in the peripheral direction (a) from occurring, and through this, it is possible to effectively prevent the leakage of fluid.

Although one exemplary embodiment of the present invention has been described above, the spirit of the present invention is not limited to the exemplary embodiments presented in the present specification, and those skilled in the art who understand the spirit of the present invention may easily suggest other exemplary embodiments by changing, modifying, deleting or adding components within the scope of the same spirit, but this will also fall within the scope of the present invention.
[Project Unique Number] 003170012
[Project Number] 2022003170012
[Name of Ministry] Ministry of Environment
[Name of Project Management (Professional) Organization] Korea Environmental Industry & Technology Institute
[Research Task Name] Green Innovation Company Growth Support Project
[Research Project Name] Commercialization of green innovation technology innovation grooved joint that meets KS and ANSI standards for smart water management
[Contribution Ratio] 1/1
[Name of Institution Performing Project] New Asia Co., Ltd.
[Research Period] April 1, 2022 to December 31, 2024

This work was supported by Korea Environment Industry & Technology Institute(KEITI) through Prospective green technology innovation project, funded by Korea Ministry of Environment(MOE).(2022003170012)

## Claims

1. A coupling assembly for connecting pipes in which two or more couplers are disposed to oppose each other to connect pipes that are arranged continuously along the axial direction, and which connects the pipes while a fastening member is provisionally assembled to a plurality of the couplers,
wherein the coupler comprises a body portion which is provided with an internal space in which a sealing member is disposed, a locking portion which extends inward in the radial direction at both ends of the body portion in the width direction and is inserted into a fastening groove formed in the pipe, and a fastening portion which is disposed at both ends in the peripheral direction of the body portion and through which the fastening member is fastened,
wherein the sealing member comprises a base which is pressed by an inner surface of the body portion, a side wall which extends inward in the radial direction from the base, and a leg which extends from the side wall and is deformed inward in the radial direction so as to support an outer surface of the pipe when assembling the coupler, and
wherein the inner surface of the body portion is provided with a receiving groove which extends radially outward such that at least a part of the base is inserted and disposed to prevent the sealing member from being deformed along the peripheral direction when assembling the coupler.

2. The coupling assembly of claim 1, wherein the receiving groove is formed to extend along the peripheral direction on the inner surface of the body portion.

3. The coupling assembly of claim 2, wherein the cross-sectional area in the peripheral direction of the receiving groove is formed to have a size that is equal to the difference between the cross-sectional area in the peripheral direction of the entire sealing member and the cross-sectional area in the peripheral direction of the internal space based on a state where the leg is deformed and supports the outer surface of the pipe as the coupler is assembled.

4. The coupling assembly of claim 1, wherein on both sides of the locking portion, interference prevention grooves are provided to prevent interference between the locking portion and the pipe such that the outer peripheral surface of the pipe can penetrate between the provisionally assembled couplers,
wherein the interference prevention groove is provided with a first extension surface which is formed to extend outward in the radial direction, and a second extension surface which is formed to extend downward from the first extension surface and has a curvature that is disposed on a concentric circle with a lower surface of the locking portion, and
wherein the receiving groove is provided with a first receiving surface and a second receiving surface that are respectively disposed to be spaced apart outward in the radial direction from the first extension surface and the second extension surface by a first length.

5. The coupling assembly of claim 4, wherein one end and the other end of the first receiving surface are disposed on a first extension line which respectively connects the center of the body portion and one end and the other end of the first extension surface, and
wherein one end and the other end of the second receiving surface are disposed on a second extension line which respectively connects the center of the body portion and one end and the other end of the second extension surface.

6. The coupling assembly of claim 4, wherein the internal space disposed at the uppermost part of the body portion is formed to have a depth that is equal to a second length along the radial direction, and
wherein the second length is formed to be greater than or equal to the first length.

7. The coupling assembly of claim 4, wherein the cross-sectional area in the peripheral direction of the receiving groove is formed to have a size that is equal to the difference between the cross-sectional area in the peripheral direction of the entire sealing member and the cross-sectional area in the peripheral direction of the internal space based on a state where the leg is deformed and supports an outer surface of the pipe as the coupler is assembled.

8. A method for manufacturing the coupling assembly for connecting pipes according to claim 1, comprising the steps of:
manufacturing a coupler comprising a body portion which is provided with an internal space in which a sealing member is disposed, a locking portion which extends inward in the radial direction at both ends of the body portion in the width direction and is inserted into a fastening groove formed in the pipe, and a fastening portion which is disposed at both ends in the peripheral direction of the body portion and through which the fastening member is fastened; and
forming a receiving groove on an inner surface of the body portion into which at least a part of a base provided on the sealing member is inserted,
wherein the step of forming a receiving groove on an inner surface of the body portion comprises the step of forming the cross-sectional area in the peripheral direction of the receiving groove to have a size that is equal to the difference between the cross-sectional area in the peripheral direction of the entire sealing member and the cross-sectional area in the peripheral direction of the internal space based on a state where a leg of the sealing member is deformed and supports an outer surface of the pipe as the coupler is assembled.
